# FASCICULE DE BREVET EUROPEEN

(11) **EP 1 458 584 B1**
(45) Date de publication et mention de la délivrance du brevet: **30.08.2006**
(21) Numéro de dépôt: 02796608.4
(22) Date de dépôt: 11.12.2002
(51) Int. Cl.: B60K 15/03

(54) **RESERVOIR A CARBURANT POUR VEHICULE AUTOMOBILE**
KRAFTSTOFFTANK FÜR EIN KRAFTFAHRZEUG
MOTOR VEHICLE FUEL TANK

(30) Priorité: 21.12.2001 FR 0116892
(43) Date de publication de la demande: 22.09.2004
(73) Titulaire: Inergy Automotive Systems Research (Société Anonyme), 1120 Bruxelles (BE)
(72) Inventeur: FIRTION, Eric, F-60150 Villers Sur Coudun (FR); BAUDOUX, Patrice, F-02520 Flavy Le Martel (FR); ROSSEEL, Alexis, F-60200 Compiegne (FR)
(74) Mandataire: Jacques, Philippe
(86) Numéro de dépôt international: PCT/EP2002/014071
(87) Numéro de publication internationale: WO 2003/053731

(56) Documents cités:
- FR-A- 2 786 224
- US-A- 2002 008 221
- US-A1- 2001 047 822
- PATENT ABSTRACTS OF JAPAN vol. 2002, no. 03, 3 avril 2002 (2002-04-03) & JP 2001 329924 A (HONDA MOTOR CO LTD), 30 novembre 2001 (2001-11-30)

## Description

La présente invention a pour objet un assemblage d'au moins deux pièces destinées à être en contact avec du carburant, en particulier des hydrocarbures.

Un réservoir à carburant comporte généralement, outre une enveloppe destinée au stockage du carburant, plusieurs éléments destinés à assurer d'autres fonctions, notamment le dégazage, la mesure du niveau du carburant dans le réservoir, l'alimentation du moteur en carburant et la régulation de la pression du carburant quittant le réservoir.

Les différents éléments permettant d'assurer ces fonctions sont généralement directement soudés sur l'enveloppe du réservoir ou assemblées grâce à des organes de maintien tels que des écrous, ce qui n'est pas entièrement satisfaisant du point de vue de la réglementation concernant les émissions d'hydrocarbures.

La présente invention vise notamment à simplifier et à rendre plus fiable l'assemblage des différents éléments d'un réservoir à carburant.

L'invention vise également à permettre de réduire les émissions d'hydrocarbures.

Elle y parvient grâce à un nouvel assemblage selon la revendication 1, comprenant d'au moins deux pièces destinées à être au contact d'hydrocarbures, l'une des pièces étant constituée par une enveloppe de réservoir à carburant ou un organe de maintien fixé sur cette enveloppe et l'autre pièce par un élément rapporté à l'intérieur de cette enveloppe, les deux pièces assemblées comportant chacune au moins une partie de fixation aptes à coopérer pour assurer le maintien de l'une des pièces sur l'autre. L'une au moins des pièces est réalisée dans un matériau apte à gonfler sous l'action desdits hydrocarbures, les parties de fixation étant agencées de telle sorte que le gonflement de l'une d'entre elles au moins, sous l'effet desdits hydrocarbures, tende à renforcer le maintien de l'une des pièces sur l'autre.

L'organe de maintien peut être fixé sur l'enveloppe par tout moyen approprié. Un moyen de maintien ayant donné de bons résultats est le soudage.

L'élément rapporté peut être tout élément susceptible d'être incorporé à un réservoir. Par exemple, cet élément rapporté peut être un clapet ou encore une jauge à carburant.

Grâce à l'invention, l'assemblage des deux pièces peut s'effectuer d'une manière simple, par exemple par encliquetage, sans pour autant craindre un détachement ultérieur sous l'effet des vibrations du véhicule lors du roulage par exemple, grâce au verrouillage obtenu par le gonflement de l'une des pièces ou des deux pièces au contact des hydrocarbures.

Il est possible le cas échéant, grâce à l'invention, de réaliser l'enveloppe du réservoir avec au moins une couche formant barrière vis-à-vis du carburant et de fixer les éléments rapportés sur cette enveloppe sans altérer la couche formant barrière, ce qui permet de réduire les émissions d'hydrocarbures.

La mise en place des pièces peut s'effectuer manuellement, sans outil spécifique.

Dans une mise en oeuvre de l'invention, les propriétés de gonflement au contact du carburant des matériaux utilisés pour réaliser les parties de fixation sont différentes, ce qui peut permettre par exemple de contrôler plus facilement la manière dont évolue l'assemblage au contact du carburant.

L'enveloppe ou l'organe de maintien est dé préférence réalisé dans un matériau ayant davantage tendance à gonfler que le matériau dans lequel est réalisé l'élément rapporté.

Chacune des deux pièces peut ne comporter qu'une seule partie de fixation, par exemple une portion de sphère ou une cavité sphérique, aptes à coopérer pour former une fixation ayant une fonction de rotule.

Les deux pièces peuvent aussi comporter plus d'une partie de fixation. Dans ce cas, un mode de réalisation préféré est celui dans lequel chaque pièce porte deux parties de fixation.

Dans une mise en oeuvre préférée de l'invention, les parties de fixation peuvent aussi être réalisées dans un matériau comportant une même matière polymère, mais comprenant cependant des charges en quantités différentes d'un matériau à l'autre.

Ainsi, les parties de fixation peuvent être réalisées dans des PEHD respectivement non chargés et renfermant une charge, notamment une charge de fibres de verre ou de talc.

D'autres matériaux peuvent encore être utilisés, notamment du polyacétal, du polyamide ou du PBT.

Les parties de fixation peuvent encore être réalisées dans des matériaux comportant des matières polymères différentes, par exemple du PEHD et du polyacétal respectivement.

En variante, les matériaux utilisés pour réaliser les parties de fixation sont identiques.

Lorsque l'une des pièces est constituée par un organe de maintien soudé sur l'enveloppe du réservoir, l'organe de maintien et l'enveloppe sont avantageusement réalisés dans des matériaux présentant des propriétés de gonflement sensiblement identiques, étant par exemple réalisés dans un même matériau, notamment du PEHD. Ainsi, l'organe de maintien et l'enveloppe se comportent de manière similaire sous l'action du carburant, ce qui limite les déformations différentielles entre ces deux éléments, susceptibles de fragiliser le maintien de l'organe de maintien sur l'enveloppe.

Une partie de fixation peut comporter, par exemple, au moins deux portées extérieures entre lesquelles et au contact desquelles peuvent venir se fixer deux portées intérieures appartenant à l'autre partie de fixation, lorsque les deux pièces sont assemblées.

Dans un exemple de mise en oeuvre de l'invention, les portées extérieures sont au nombre de quatre au moins et sont regroupées par paires, les portées extérieures d'une même paire étant situées en face l'une de l'autre, et les portées intérieures de l'autre partie de fixation sont également au nombre de quatre au moins et regroupées par paires, les portées intérieures d'une même paire étant situées en face l'une de l'autre ; chaque portée intérieure d'une partie de fixation pouvant s'engager sur une portée extérieure de l'autre partie de fixation.

L'une des parties de fixation peut être fixée sur l'autre en étant mise en place manuellement par un mouvement de coulissement, par exemple, sans outillage spécifique.

Lorsque l'une des pièces de l'assemblage est un clapet, ce mouvement de coulissement est par exemple parallèle à l'axe d'un embout servant à raccorder le clapet à une tubulure, ce qui peut permettre de faciliter le maniement du clapet lors de sa mise en place.

Les portées intérieures, réalisées sur l'enveloppe du réservoir par exemple, peuvent être regroupées par paires comme indiqué plus haut, et au sein d'une même paire, chaque portée intérieure peut comporter au moins un retour dirigé dans une direction opposée à l'autre portée intérieure.

Les portées extérieures peuvent comporter des rainures dans lesquelles peuvent s'engager lesdits retours des portées intérieures.

Au moins l'une de ces rainures peut être formée entre deux nervures parallèles.

En variante, au moins l'une de ces rainures est formée entre un retour d'une portée extérieure et la paroi sur laquelle se raccorde cette portée.

L'une des pièces peut comporter au moins un relief d'encliquetage apte à s'encliqueter sur l'autre pièce au terme du mouvement d'assemblage, qui est par exemple un coulissement comme indiqué plus haut.

Ce ou ces reliefs peuvent être portés par l'une des parties de fixation et se situer par exemple à une extrémité des rainures précitées, étant par exemple réalisés sur les portées extérieures ou intérieures elles-mêmes ou sur des parois auxquelles se raccordent ces portées.

Le ou les reliefs en question peuvent comporter un flanc incliné pouvant être franchi facilement lors du déplacement de l'une des parties de fixation par rapport à l'autre lors de l'assemblage et un flanc droit s'opposant, après franchissement dudit flanc incliné, au désassemblage des deux pièces.

L'une des pièces peut comporter, outre au moins un relief d'encliquetage comme expliqué ci-dessus, au moins une butée contre laquelle vient en appui l'autre pièce au terme du mouvement d'assemblage.

Une telle butée peut être formée par exemple à l'extrémité d'une rainure telle que définie plus haut et peut servir en outre à consolider la structure locale de la pièce au niveau de cette rainure.

Lorsque l'une des pièces est un clapet, les portées intérieures peuvent être réalisées dans un renfoncement de l'enveloppe du réservoir et se raccorder à une paroi plane formant le fond dudit renfoncement.

Lorsque l'une des pièces est un support de jauge à carburant, les portées intérieures peuvent être réalisées sur une nervure formant saillie sur la surface intérieure de l'enveloppe du réservoir et s'étendant sensiblement perpendiculairement à cette dernière.

Selon l'invention, les parties de fixation de l'assemblage sont agencées de manière à coopérer par encliquetage pour assurer le maintien de l'une des pièces sur l'autre.

L'une des parties de fixation comporte au moins une patte élastiquement déformable apte à s'encliqueter sur l'autre pièce.

Lorsque l'une des pièces est constituée par un organe de maintien, celui-ci peut comporter une paroi tubulaire soudée sur l'enveloppe du réservoir par une extrémité et présentant à l'autre extrémité un bourrelet annulaire, dirigé radialement vers l'extérieur, et sur lequel peuvent prendre appui des pattes élastiquement déformables de l'élément rapporté.

L'élément rapporté peut comporter une jupe intérieure apte à s'engager dans la paroi tubulaire de l'organe de maintien et une jupe extérieure à laquelle se raccordent les pattes élastiquement déformables.

Dans cet ensemble de mise en oeuvre, le mouvement d'encliquetage peut être parallèle à l'axe de la paroi tubulaire de l'organe de maintien.

Dans une mise en oeuvre particulière de l'invention, l'une des pièces comporte au moins un relief apte à s'opposer à une rotation de l'une des pièces par rapport à l'autre lorsque ces dernières sont assemblées.

En particulier, lorsque l'une des parties de fixation est réalisée avec l'enveloppe du réservoir, l'autre partie de fixation peut comporter deux couples de nervures destinées à venir en appui sur l'enveloppe du réservoir, notamment un premier couple de nervures parallèles à la direction de mise en place de l'une des pièces sur l'autre et un deuxième couple de nervures disposées de part et d'autre du premier couple de nervures et orientées sensiblement perpendiculairement à la direction selon laquelle l'une des pièces est mise en place sur l'autre.

L'invention a encore pour objet un réservoir à carburant de véhicule automobile, caractérisé par le fait qu'il comporte un assemblage tel que défini plus haut, la deuxième pièce étant constituée d'un élément rapporté choisi parmi un clapet et une jauge à carburant.

L'enveloppe du réservoir peut être réalisée par injection de matière thermoplastique ou par soufflage ou rotomoulage.

L'enveloppe du réservoir peut comprendre, par exemple, deux demi-coquilles réalisées par injection de matière thermoplastique et assemblées par soudure.

L'invention a encore pour objet un procédé de fabrication d'un réservoir à carburant de véhicule automobile selon la revendication 10. Il comporte les étapes suivantes :
a) assembler deux pièces constitutives du réservoir, avant mise en contact de celles-ci avec le carburant, les deux pièces comportant des parties de fixation aptes à coopérer pour assurer le maintien de l'une des pièces sur l'autre, l'une au moins des pièces étant réalisée dans un matériau apte à gonfler sous l'action du carburant,
b) mettre lesdites pièces au contact du carburant de manière à provoquer un gonflement d'une au moins des parties de fixation et un renforcement du maintien de l'une des pièces sur l'autre.

D'autres caractéristiques et avantages de la présente invention ressortiront à la lecture de la description détaillée qui va suivre, d'exemples de mise en oeuvre non limitatifs, et à l'examen du dessin annexé, sur lequel :
la figure 1 est une vue schématique et partielle, en perspective, d'une enveloppe de réservoir à carburant conforme à l'invention,
la figure 2 est une vue schématique, en perspective, d'un clapet destiné à équiper le réservoir de la figure 1,
la figure 3 est une vue schématique et partielle, en perspective, de l'assemblage du clapet de la figure 2 sur l'enveloppe du réservoir,
les figures 4a et 4b sont deux coupes schématiques et partielles, selon IV-RV de la figure 3, correspondant à deux étapes de l'assemblage,
la figure 5 représente schématiquement et partiellement, en perspective, une variante de clapet destiné à équiper l'enveloppe de la figure 1,

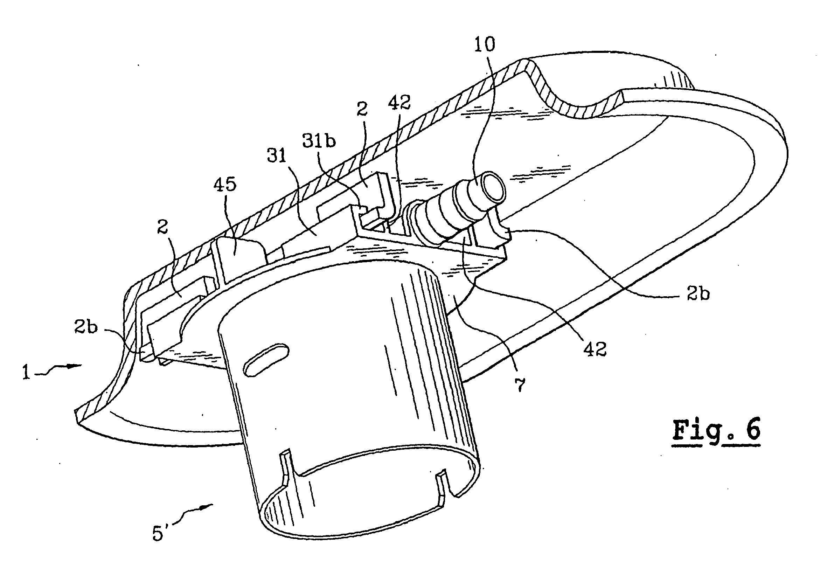

la figure 6 est une vue schématique et partielle, en perspective, de l'enveloppe équipée du clapet de la figure 5,
la figure 7 représente schématiquement et partiellement, en perspective, une nervure destinée à servir de support à une jauge à carburant,
la figure 8 représente schématiquement et partiellement, en perspective, un support de la jauge destiné à être monté sur la nervure de la figure 7,
la figure 9 représente schématiquement et partiellement, en perspective, la nervure équipée du support de jauge à carburant, et
la figure 10 représente schématiquement et partiellement, en coupe axiale, l'assemblage d'un organe de maintien soudé sur l'enveloppe du réservoir et d'un clapet.

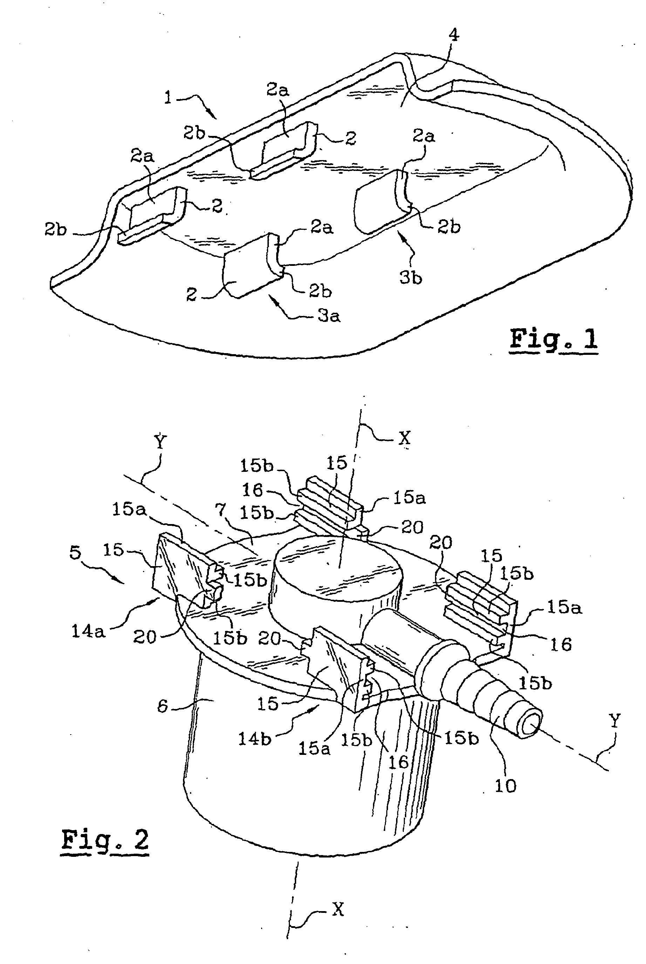

On a représenté partiellement sur la figure 1 une enveloppe 1 d'un réservoir à carburant de véhicule automobile.

Le carburant peut être de tout type, et comporter des hydrocarbures et/ou alcools notamment.

Cette enveloppe 1 est réalisée, dans l'exemple décrit, par moulage par injection de PEHD non chargé et peut comporter, du côté intérieur, une couche formant barrière aux hydrocarbures, par exemple en EVOH.

L'enveloppe 1 comporte un renfoncement 4 ayant une paroi de fond plane sur laquelle se raccordent deux paires 3a et 3b de pattes 2.

Les pattes 2 d'une même paire 3a ou 3b sont situées en regard l'une de l'autre et les paires 3a et 3b sont dans l'alignement l'une de l'autre.

Chaque patte 2 de la paire 3a, respectivement de la paire 3b, comporte un montant 2a se raccordant perpendiculairement à l'enveloppe 1, et une partie recourbée ou retour 2b dirigé dans une direction opposée à l'autre patte 2 de la paire 3a, respectivement de la paire 3b.

Les pattes 2 sont destinées au maintien sur l'enveloppe 1 d'un élément rapporté 5 constitué dans l'exemple décrit par un clapet représenté isolément sur la figure 2.

Ce clapet 5 est réalisé dans l'exemple décrit en PEHD chargé avec des fibres de verre ou du talc.

Le clapet 5 comporte un corps tubulaire 6 d'axe X, se raccordant par une extrémité à une platine 7 perpendiculaire à l'axe X.

Cette dernière supporte du côté opposé au corps 6 un embout 10 d'axe Y perpendiculaire à l'axe X et destiné à recevoir un tuyau, non représenté.

La platine 7 supporte également, du côté opposé au corps 6, deux paires 14a et 14b de pattes 15, les pattes 15 de chaque paire 14a ou 14b étant disposées en regard l'une de l'autre, de part et d'autre d'un plan médian contenant les axes X et Y. Les paires 14a et 14b sont dans l'alignement l'une de l'autre dans la direction de l'axe Y.

Chaque patte 15 comporte un montant 15a se raccordant perpendiculairement à la platine 7.

Chaque montant 15a comporte, sur sa face dirigée vers l'autre patte de la même paire, deux nervures 15b parallèles à l'axe Y, définissant entre elles une rainure 16 d'axe Y, apte à recevoir la partie recourbée 2b d'une patte 2.

Les pattes 2 constituent des portées intérieures et les pattes 15 des portées extérieures au sens de la présente invention.

Chaque patte 15 comporte, à l'extrémité de la rainure 16 qui est située du côté de la patte 15 adjacente, une dent 20 apte à s'encliqueter derrière une patte 2 de l'enveloppe 1.

La mise en place du clapet 5 sur l'enveloppe 1 s'effectue de la manière suivante.

On engage les pattes 15 du clapet sur les pattes 2 de l'enveloppe 1, en faisant coulisser les parties recourbées 2b dans les rainures 16.

Le mouvement de coulissement s'effectue donc parallèlement à l'axe Y.

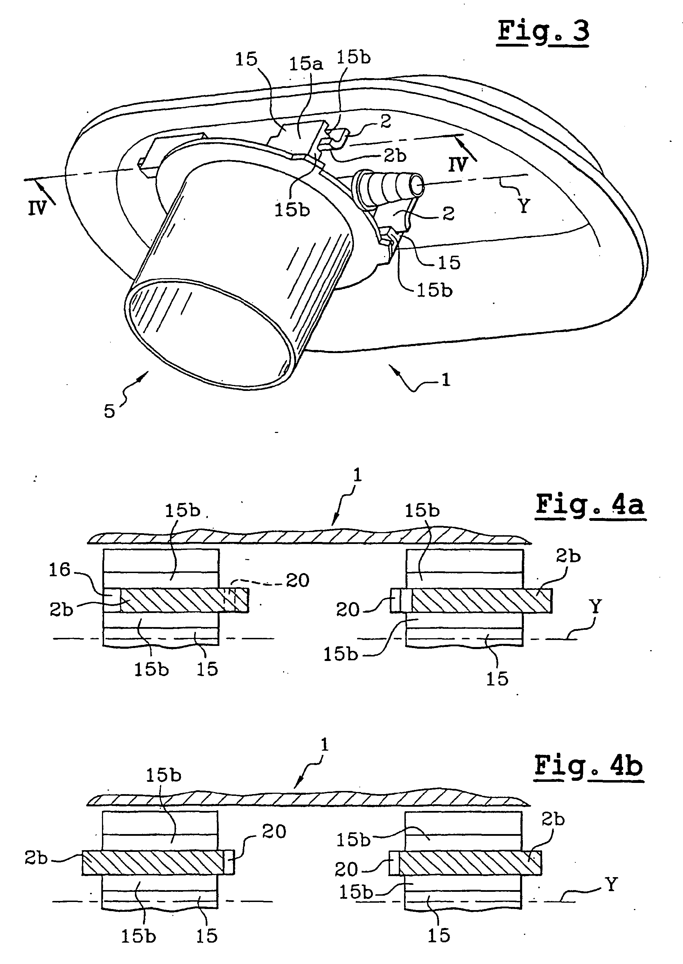

Les dents 20 peuvent être franchies par déformation élastique par les parties recourbées 2b lors de la mise en place du clapet 5, comme illustré sur les figures 4a et 4b.

Au terme du mouvement de coulissement, les dents 20 se logent entre les pattes 2 et forment des butées s'opposant jusqu'à un certain point au déplacement en translation suivant l'axe Y du clapet 5 par rapport à l'enveloppe 1.

Lorsque du carburant est introduit ultérieurement dans le réservoir, les pattes 2 et 15 viennent en contact avec le carburant.

L'enveloppe 1 et les pattes 2 étant réalisées en PEHD non chargé subissent un gonflement au contact du carburant.

Du fait de ce gonflement, les parties recourbées 2b se bloquent dans les nervures 15b, lesquelles ne subissent pas de gonflement ou subissent un gonflement relativement faible par rapport à celui de l'enveloppe, les pattes 15 étant réalisées en PEHD chargé.

Le blocage ainsi obtenu-renforce le maintien du clapet 5 sur l'enveloppe 1.

On ne sort pas du cadre de la présente invention en modifiant la forme de la partie d'assemblage du clapet.

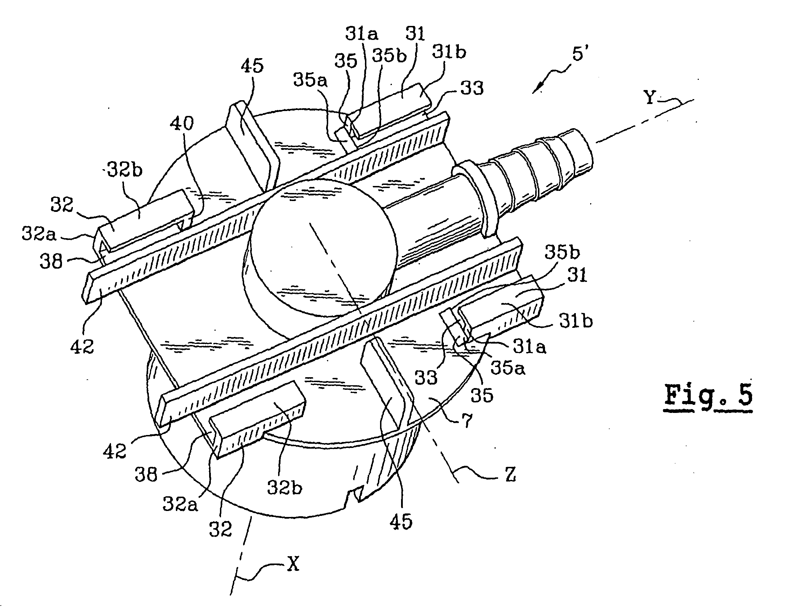

On a représenté sur la figure 5 un clapet 5' comportant une première paire de pattes 31 en regard et une deuxième paire de pattes 32 en regard, disposées comme les quatre pattes 15 de l'exemple précédent mais présentant une structure différente de ces dernières.

Les pattes 31 comportent chacune une première partie 31 a se raccordant perpendiculairement à la platine 7, cette première partie 31a étant prolongée par une seconde partie recourbée 31b, dirigée en direction de l'autre patte 31.

Les première partie 31 a et seconde partie 31 b de chaque patte 31 définissent avec la platine 7 une rainure 33 s'étendant longitudinalement suivant l'axe Y.

Un relief d'encliquetage 35 est formé sur la platine 7 à l'extrémité de chaque rainure 33, du côté des pattes 32.

Chaque relief d'encliquetage 35 comporte un flanc incliné 35a pouvant être franchi par une partie recourbée 2b lors du déplacement du clapet sur l'enveloppe et un flanc droit 35b s'opposant ensuite au retrait de la partie recourbée 2b engagée dans la rainure 33.

Les pattes 32 comportent chacune des première et seconde parties 32a et 32b analogues aux première et deuxième parties 31 a et 31b, définissant pour chaque patte 32 une rainure 38 s'étendant suivant l'axe Y, destinée à recevoir une partie recourbée 2b.

Chaque patte 32 comporte également une butée 40 située à l'extrémité de la rainure 38, du côté des pattes 31.

Chaque butée 40 se raccorde aux première et seconde parties 32a et 32b et à la platine 7, ce qui renforce la structure de la patte 32.

La platine 7 supporte en outre une paire de nervures 42 se raccordant perpendiculairement à celle-ci et s'étendant de part et d'autre de l'axe Y, parallèlement à cet axe.

Les nervures 42 présentent une hauteur choisie de manière à leur permettre de venir en appui sur la surface intérieure de l'enveloppe 1 lorsque le clapet 5' est mis en place sur celle-ci, de manière à ce que le clapet 5' soit bloqué en rotation par rapport à un axe Z perpendiculaire aux axes X et Y.

La platine 7 supporte également une paire de nervures 45 se raccordant perpendiculairement à celle-ci, situées chacune entre deux pattes 31 et 32, et s'étendant suivant l'axe Z.

Ces nervures 45 permettent d'empêcher une rotation du clapet 5' par rapport à l'enveloppe 1 autour de l'axe Y.

La mise en place du clapet 5' sur l'enveloppe 1 s'effectue en faisant coulisser les parties recourbées 2b des pattes 2 dans les rainures 33 et 38 formées par les pattes 31 et 32.

A la fin du mouvement de coulissement, les parties recourbées 2b qui ont coulissé dans les rainures 33 s'engagent derrière les reliefs d'encliquetage 35, venant en appui sur les flancs droits 35b, et les parties recourbées 2b ayant coulissé dans les rainures 38 viennent en appui contre les butées 40.

Le clapet 5' est alors immobilisé dans une certaine mesure par rapport à l'enveloppe 1 suivant l'axe Y.

Le gonflement de l'enveloppe 1 produit ensuite un blocage supplémentaire du clapet 5' par rapport à l'enveloppe, à l'instar de l'exemple de réalisation précédent.

Les deux pièces de l'assemblage peuvent encore être réalisées dans des matières plastiques différentes et non pas dans une même matière plastique comportant des quantités de charges différentes.

Dans une autre variante, les deux pièces de l'assemblage sont réalisées dans une même matière plastique, par exemple du PEHD, et l'une au moins des pièces est agencée de manière à ce que le gonflement de la matière produise un effet de blocage de l'assemblage avec l'autre pièce.

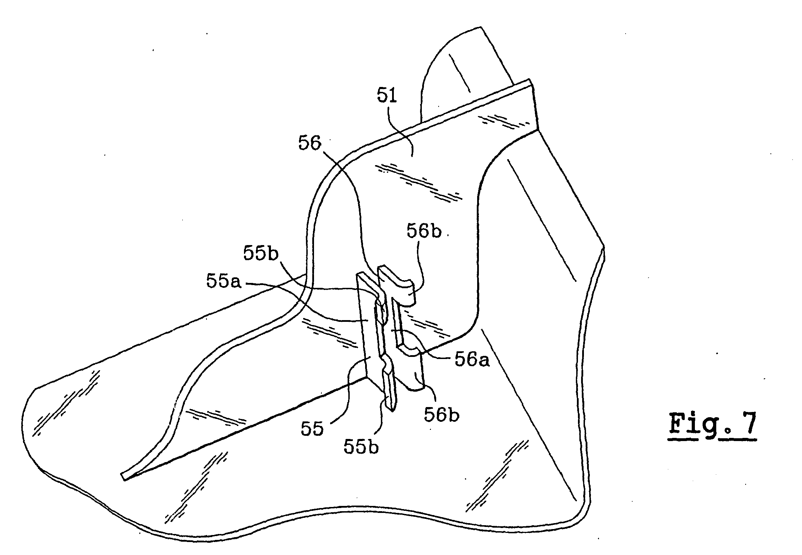

On a décrit en référence aux figures 7 à 9 l'assemblage d'une jauge à carburant 50 sur une nervure 51 de l'enveloppe du réservoir.

La nervure 51 supporte deux pattes 55 et 56 en regard, comportant respectivement un montant 55a et un montant 56a, lesquels se raccordent perpendiculairement à la nervure 51.

Le montant 55a, respectivement le montant 56a, est prolongé à son extrémité supérieure par deux retours 55b, respectivement deux retours 56b, lesquels sont dirigés à l'opposé de la patte 56, respectivement de la patte 55.

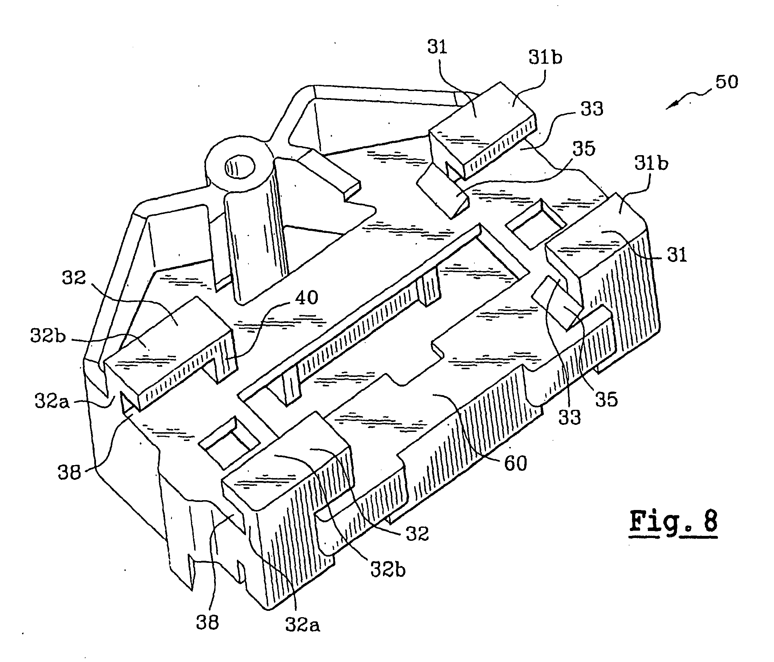

La jauge à carburant 50 comporte un support 60 réalisé en polyacétal et représenté isolément à la figure 8.

Ce support 60 comporte deux pattes 31 et deux.pattes 32 analogues à celles du clapet 5' formant des rainures 33 et 38 destinées à recevoir chacune un retour 55b ou 56b.

L'assemblage du support 60 sur la nervure 51 s'effectue de manière analogue à l'assemblage du clapet 5' sur l'enveloppe 1.

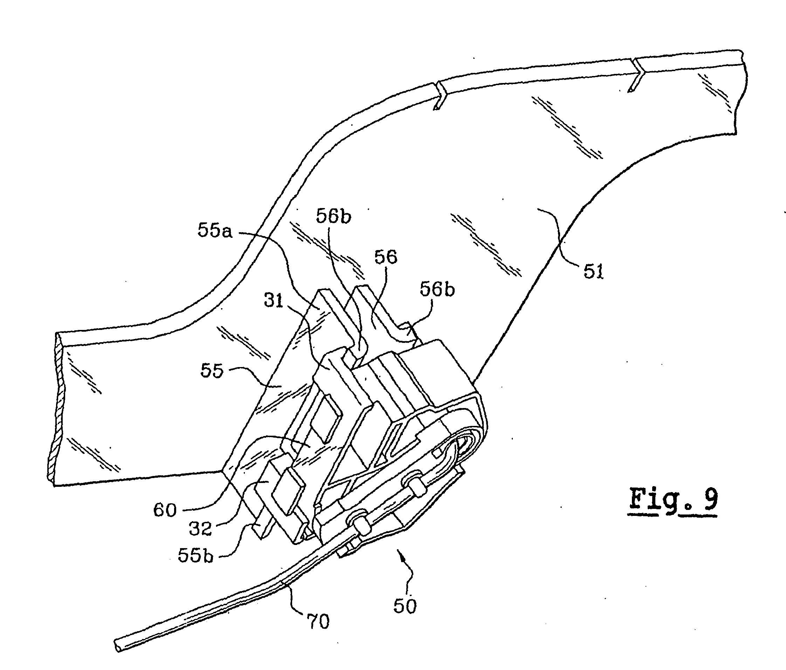

Après cet assemblage, on fixe, comme représenté sur la figure 9, sur le support 60 une tige 70 supportant un flotteur, non représenté.

En variante, cette tige 70 peut être fixée sur le support 60 avant sa mise en place sur la nervure 51.

Le verrouillage définitif de lajauge à carburant 50 sur les pattes 55 et 56 s'effectue en mettant l'assemblage au contact du carburant.

Bien entendu, l'invention n'est pas limitée aux exemples de réalisation qui viennent d'être décrits.

On peut notamment fixer sur l'enveloppe tout type d'élément rapporté, autre qu'un clapet ou une jauge à carburant, par exemple une pompe ou un filtre.

L'invention peut également s'appliquer à l'assemblage de deux pièces distinctes de l'enveloppe au réservoir.

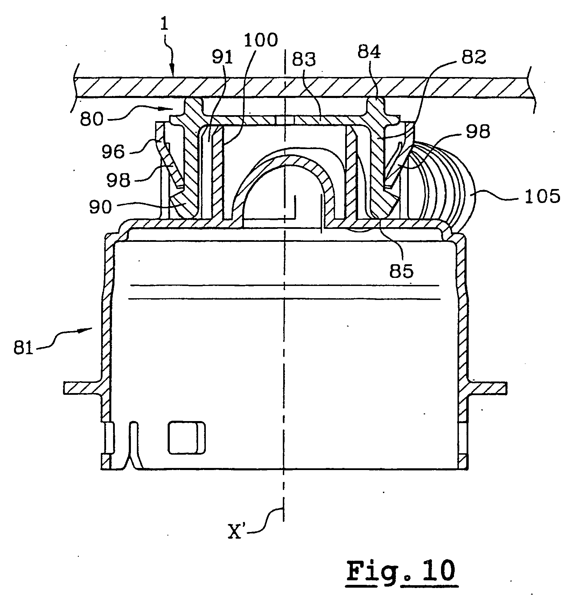

On a représenté en référence à la figure 10 un tel assemblage, comprenant un organe de maintien 80 soudé sur l'enveloppe 1 du réservoir et un élément rapporté 81 constitué par un clapet.

Dans l'exemple décrit, l'organe de maintien 80 est réalisé dans du PEHD et l'élément rapporté 81 dans du POM.

L'organe de maintien 80 comporte une paroi tubulaire de révolution 82, d'axe X', et une paroi transversale 83, située à une distance relativement faible d'une extrémité axiale 84 de la paroi tubulaire 82.

L'organe de maintien 80 est soudé à l'enveloppe 1 par son extrémité supérieure 84.

La paroi tubulaire 82 présente à son extrémité inférieure 85 un bourrelet annulaire 90, dirigé radialement vers l'extérieur.

Les parois tubulaire 82 et transversale 83 définissent un logement 91 ouvert vers le bas permettant de recevoir la partie supérieure de l'élément rapporté 81, lequel comporte une jupe extérieure 96, d'axe X', et des pattes élastiquement déformables 98. Ces dernières prennent appui sur le bourrelet 90.

Le clapet 81 comporte en outre une jupe intérieure 100, également d'axe X', engagée dans la paroi tubulaire 82 et prenant appui contre la paroi transversale 83.

Le clapet 81 est muni d'un embout de raccordement 105 s'étendant latéralement, traversant les jupes intérieure 100 et extérieure 96.

La mise en place du clapet 81 sur l'organe 96 de maintien 40 s'effectue par encliquetage suivant l'axe X', les pattes 98 franchissant par déformation élastique le bourrelet 90.

Lorsque du carburant est introduit ultérieurement dans le réservoir, les pattes 98 et le bourrelet 90 viennent en contact avec du carburant.

Le bourrelet 90 étant réalisé en PEHD subit un gonflement au contact du carburant et exerce une force de blocage sur les pattes 98 engagées derrière lui, ce qui renforce le maintien du clapet 81 sur l'organe de maintien 80.

## Revendications

1. Assemblage d'au moins deux pièces destinées à être au contact d'hydrocarbures, l'une des pièces étant constituée par une enveloppe (1) de réservoir à carburant comprenant une couche formant barrière vis-à-vis du carburant ou un organe de maintien (80) fixé sur cette enveloppe et l'autre pièce par un élément rapporté à l'intérieur de l'enveloppe, les deux pièces assemblées comportant chacune au moins une partie de fixation (2, 15 ; 31, 32 ; 55, 56 ; 90, 98) aptes à coopérer pour assurer le maintien de l'une des pièces sur l'autre, cet assemblage étant tel que :
- l'une au moins desdites pièces étant réalisée dans un matériau apte à gonfler sous l'action desdits hydrocarbures et les parties de fixation étant agencées de telle sorte que le gonflement de l'une d'entre elles au moins, sous l'effet desdits hydrocarbures, tende à renforcer le maintien des deux pièces l'une sur l'autre ;
- l'une des parties de fixation comporte au moins une patte élastiquement déformable (2b), apte à s'encliqueter sur l'autre pièce ; et
- la fixation de l'élément rapporté se fait sans altérer la couche barrière de la paroi du réservoir.

2. Assemblage selon la revendication précédente, **caractérisé en ce que** l'organe de maintien (80) est fixé sur l'enveloppe (1) par soudage.

3. Assemblage selon une quelconque des revendications précédentes, **caractérisé en ce que** l'élément rapporté est choisi parmi un clapet (5,5') et une jauge à carburant (50).

4. Assemblage selon une quelconque des revendications précédentes, **caractérisé par le fait que** les propriétés de gonflement des matériaux utilisés pour réaliser les parties de fixation (2, 15 ; 31, 32 ; 55, 56) sont différentes.

5. Assemblage selon une quelconque des revendications précédentes, **caractérisé par le fait que** l'enveloppe (1) ou l'organe de maintien (80) est réalisé dans un matériau ayant davantage tendance à gonfler que le matériau dans lequel est réalisé l'élément rapporté.

6. Assemblage selon la revendication 1, **caractérisé par le fait que** les matériaux utilisés pour réaliser les parties de fixation sont identiques.

7. Assemblage selon une quelconque des revendications précédentes, l'une des pièces étant constituée par un organe de maintien soudé sur l'enveloppe du réservoir, **caractérisé par le fait que** l'organe de maintien et l'enveloppe sont réalisés dans des matériaux présentant des propriétés de gonflement sensiblement identiques, étant réalisés dans un même matériau en PEHD.

8. Assemblage selon une quelconque des revendications précédentes, **caractérisé par le fait que** l'encliquetage est réalisé au terme d'un mouvement d'assemblage de coulissement.

9. Réservoir à carburant de véhicule automobile, **caractérisé par le fait qu'**il comporte un assemblage tel que défini dans l'une quelconque des revendications précédentes, la deuxième pièce étant constituée d'un élément rapporté choisi parmi un clapet (5, 5') et une jauge à carburant (50).

10. Procédé de fabrication d'un réservoir à carburant de véhicule automobile comprenant une couche formant barrière vis-à-vis du carburant, **caractérisé par le fait qu'**il comporte les étapes suivantes :
- assembler par encliquetage deux pièces constitutives du réservoir, avant mise en contact de celles-ci avec le carburant, les deux pièces comportant chacune au moins une partie de fixation aptes à coopérer pour assurer le maintien de l'une des pièces sur l'autre, l'une au moins des pièces étant réalisée dans un matériau apte à gonfler sous l'action du carburant, et l'une des parties de fixation comportant au moins une patte élastiquement déformable apte à s'encliqueter sur l'autre pièce, l'assemblage des deux pièces se faisant sans altérer la couche barrière de la paroi du réservoir ;
- mettre les pièces au contact du carburant de manière à provoquer un gonflement d'une au moins des parties de fixation et un renforcement du maintien de l'une des pièces sur l'autre.

## Claims

1. Assembly of at least two components which are intended to be in contact with hydrocarbons, one of the components consisting of a fuel tank casing (1) comprising a layer forming a barrier in relation to the fuel or a retaining member (80) fastened to this casing and the other component consisting of an element attached on the inside of the casing, the two assembled components each comprising at least one fastening part (2, 15; 31, 32; 55, 56; 90, 98) which are capable of interacting in order to retain one of the components on the other, this assembly being such that
- at least one of the said components is made from a material capable of swelling through the action of the said hydrocarbons, the fastening parts being arranged such that the swelling of at least one of them through the effect of the said hydrocarbons tends to reinforce the retention of the two components on one another;
- one of the fastening parts comprises at least one elastically deformable tab (2b), capable of latching onto the other component; and
- the fastening of the element attached on the inside of the casing is achieved without impairing the barrier layer of the tank casing.

2. Assembly according to the preceding claim, **characterized in that** the retaining member (80) is fastened to the casing (1) by welding.

3. Assembly according to any one of the preceding claims, **characterized in that** the attached element is selected from a valve (5, 5') and a fuel gauge (50).

4. Assembly according to any one of the preceding claims, **characterized in that** the swelling properties of the materials used to make the fastening parts (2, 15; 31, 32; 55, 56) are different.

5. Assembly according to any one of the preceding claims, **characterized in that** the casing (1) or the retaining member (80) is made from a material having a greater tendency to swell than the material from which the attached element is made.

6. Assembly according to Claim 1, **characterized in that** the materials used to make the fastening parts are identical.

7. Assembly according to any one of the preceding claims, one of the components consisting of a retaining member welded onto the casing of the tank, **characterized in that** the retaining member and the casing are made from materials having substantially identical swelling properties, being made from the same HDPE material.

8. Assembly according to any one of the preceding claims, **characterized in that** the latching is achieved at the end of a sliding assembling movement.

9. Motor vehicle fuel tank, **characterized in that** it comprises an assembly as defined in any one of the preceding claims, the second component consisting of an attached element selected from a valve (5, 5') and a fuel gauge (50).

10. Method of manufacturing a motor vehicle fuel tank, **characterized in that** it comprises the following steps:
- assembling by latching two constituent components of the tank before bringing them into contact with the fuel, the two components each comprising at least one fastening part which are capable of interacting in order to retain one of the components on the other, at least one of the components being made from a material capable of swelling through the action of the fuel, and one of the fastening parts comprising at least one elastically deformable tab capable of latching onto the other component, the assembly of the two components being done without impairing to barrier layer of the tank casing,
- bringing the components into contact with the fuel so as to cause a swelling of at least one of the fastening parts and a reinforcing of the retention of one of the components on the other.

## Patentansprüche

1. Zusammenbau aus zumindest zwei Teilen, die dazu bestimmt sind, mit Kohlenwasserstoffen in Kontakt zu kommen, wobei einer der Teile durch ein Gehäuse (1) eines Kraftstoffbehälters gebildet ist, das zumindest eine Trennschicht gegenüber dem Kraftstoff oder ein Halteorgan (80) aufweist, das an dem Gehäuse befestigt ist, und der andere Teil durch ein Element gebildet ist, das an das Gehäuseinnere angebaut ist, wobei die beiden Zusammenbauteile je einen Fixierteil (2, 15; 31, 32; 55, 56; 90, 98) aufweisen, die so ausgebildet sind, daß sie zusammenwirken, um den gegenseitigen Zusammenhalt der Teile sicherzustellen, wobei der Zusammenbau derart ausgebildet ist, daß:
- zumindest einer der Teile aus einem Material gebildet ist, das unter der Wirkung der Kohlenwasserstoffe anschwellen kann, und die Fixierteile derart ausgebildet sind, daß das Anschwellen zumindest eines derselben unter der Wirkung der Kohlenwasserstoffe bestrebt ist, den gegenseitigen Zusammenhalt der beiden Teile zu verstärken;
- einer der Fixierteile zumindest einen elastisch verformbaren Ansatz (2b) aufweist, der in den anderen Teil einrastbar ist; und
- die Fixierung des angebauten Elementes ohne Veränderung der Trennschicht der Behälterwand erfolgt.

2. Zusammenbau nach Anspruch 1, **dadurch gekennzeichnet, daß** das Halteorgan (80) an dem Gehäuse (1) durch Schweißen befestigt ist.

3. Zusammenbau nach Anspruch 1 oder 2, **dadurch gekennzeichnet, daß** als Anbauelement ein Ventil (5, 5') oder ein Kraftstoffmesser (50) gewählt wird.

4. Zusammenbau nach einem der vorhergehenden Ansprüche, **dadurch gekennzeichnet, daß** die Anschwelleigenschaften der zur Realisierung der Fixierteile (2, 15; 31, 32; 55, 56) verwendeten Materialien verschieden sind.

5. Zusammenbau nach einem der vorhergehenden Ansprüche, **dadurch gekennzeichnet, daß** das Gehäuse (1) und das Halte-organ (80) aus einem Material gebildet sind, das gegenüber dem Anbauelement die vorteilhafte Eigenschaft hat, anzuschwellen.

6. Zusammenbau nach Anspruch 1, **dadurch gekennzeichnet, daß** die verwendeten Materialien zur Ausbildung der Fixierteile identisch sind.

7. Zusammenbau nach einem der vorhergehenden Ansprüche, bei welcher einer der Teile durch ein Halteorgan gebildet ist, das an dem Gehäuse des Behälters angeschweißt ist, **dadurch gekennzeichnet, daß** das Halteorgan und das Gehäuse aus einem Material gebildet sind, die Anschwelleigenschaften haben, welche im wesentlichen identisch sind, und die aus dem gleichen Material aus PEHD gebildet sind.

8. Zusammenbau nach einem der vorhergehenden Ansprüche, **dadurch gekennzeichnet, daß** das Einrasten durch eine Gleitbewegung des Zusammenbaues erfolgt.

9. Kraftstoffbehälter für ein Automobilfahrzeug, **dadurch gekennzeichnet, daß** er einen Zusammenbau aufweist, wie er in den vorhergehenden Ansprüchen definiert ist, wobei der zweite Teil durch ein Element gebildet ist, das als Ventil (5, 5') oder Kraftstoffmesser (50) gewählt ist.

10. Verfahren zum Herstellen eines Kraftstoffbehälters für ein Automobilfahrzeug, der eine Trennschicht für Kraftstoff aufweist, **dadurch gekennzeichnet, daß** das Verfahren die folgenden Schritte umfaßt:
- Zusammenbauen durch Einrasten von zwei den Behälter bildenden Teilen vor dem Kontakt derselben mit dem Kraftstoff, wobei die beiden Teile je einen Fixierteil haben, der so ausgebildet ist, daß er zum gegenseitigen Verbinden der Teile mit einem anderen Fixierteil zusammenwirkt, wobei zumindest einer der Teile aus einem Material gebildet ist, das unter der Einwirkung des Kraftstoffes anschwillt, und der andere der Fixierteile zumindest einen elastisch verformbaren Ansatz hat, der in den anderen Teil einrastbar ist, wobei der Zusammenbau aus zwei Teilen ohne Veränderung der Trennschicht der Behälterwand erfolgt;
- Kontaktieren der Teile mit dem Kraftstoff, um ein Anschwellen zumindest eines der Fixierteile und eine Verstärkung des gegenseitigen Zusammenhaltes der Teile hervorzurufen.
